# EUROPEAN PATENT SPECIFICATION

(11) **EP 4 311 048 B1**
(45) Date of publication and mention of the grant of the patent: **09.09.2026**
(21) Application number: 22186259.2
(22) Date of filing: 21.07.2022
(51) Int. Cl.: H01T 13/58, H01T 21/02, G06T 7/60

(54) **ARRANGEMENT AND METHOD FOR MEASURING A GAP OF A SPARK PLUG**
ANORDNUNG UND VERFAHREN ZUR MESSUNG EINES ELEKTRODENABSTANDS
AGENCEMENT ET PROCÉDÉ POUR MESURER L'ÉCARTEMENT D'UNE BOUGIE D'ALLUMAGE

(43) Date of publication of application: 24.01.2024
(73) Proprietor: Volvo Car Corporation, 40531 Göteborg (SE)
(72) Inventor: TRAJKOVIC, Sasa, 40531 Göteborg (SE); WALLGREN FJELLANDER, Michael, 40531 Göteborg (SE); MERGENTHALER, Kilian, 40531 Göteborg (SE)
(74) Representative: Kransell & Wennborg KB

(56) References cited:
- US-A1- 2004 067 712
- US-A1- 2019 103 732
- US-A1- 2020 021 085
- TAN CHIN LUH: "Measuring Size of Objects In Images", 11 September 2017 (2017-09-11), Internet, Retrieved from the Internet <URL:https://www.linkedin.com/pulse/measuring-size-objects-images-tan-chin-luh> [retrieved on 20240923]

## Description

### TECHNICAL FIELD

The present disclosure relates to an arrangement for measuring a gap between a first electrode and a second electrode of a spark plug, a method for measuring a gap between a first electrode and a second electrode of a spark plug and a computer storage medium for performing such method.

### BACKGROUND ART

Maintenance techniques are used to determine the condition of components to estimate when maintenance should be performed. One purpose is to allow a corrective maintenance and prevent from unexpected failures of the components. Other purposes could be to assess whether new components follow specifications of the product. Hence, maintenance techniques are used to predict when the components need to be replaced and to evaluate the components.

One component where maintenance techniques are used beneficially is the spark plug. A spark plug is a device used to ignite compressed fuel/air mixture by delivering electric current from an ignition system to a combustion chamber of a spark-ignition engine. A spark plug comprises two electrodes, where the gap in-between correlates to their wear. The larger the gap, the more degraded is the spark plug.

However, current techniques of measuring the gap between the electrodes of the spark plug are inefficient. A common technique extensively used is to manually measure the gap between the electrodes of the spark plug. Manual measurement is less reliable/accurate and inconvenient (e.g., time consuming). Further, some techniques may provide measurement by means of adapted apparatuses. However, such techniques also fail to provide a reliable/accurate and/or convenient measurement.
Examples of maintenance means for a spark plug may be known from US 2019/103732 A1 and US 2020/021085 A1. US 2019/103732 A1 discloses a spark plug production method comprising the steps of producing standard image data by capturing an image of a standard device including a slit forming section; determining a width of the standard slit segment of the slit in the standard image by analyzing the standard image data; producing gap image data representing a gap image by capturing an image of the spark plug; determining a distance of the discharge gap in the gap image by analyzing the gap image data; and determining whether an actual distance of the discharge gap is within a predetermined allowable range or not, by using the distance of the discharge gap determined in the gap image and the width of the standard slit segment determined in the standard image.

Even though some currently known solutions work well in some situations, it would be desirable to provide a method and an arrangement for measuring the gap of the spark plug, that fulfills the requirements relating to reliability/accuracy of the measurement, while being convenient to operate.

### SUMMARY

Hence, there may be a need to provide an improved arrangement, which may facilitate a predictive maintenance of a spark plug.

The problem is at least partially solved or alleviated by the subject matter of the independent claims of the present disclosure, wherein further examples are incorporated in the dependent claims. It should be noted that the aspects of the disclosure described in the following apply to the arrangement for measuring a gap between a first electrode and a second electrode of a spark plug, the method for measuring a gap between a first electrode and a second electrode of a spark plug and the computer storage medium for performing such method.

According to the present disclosure, an arrangement for measuring a gap between a first electrode and a second electrode of a spark plug is presented. The arrangement comprises a reference object having at least one pre-determined dimension, an imaging device configured to capture at least one image of a combination of the reference object and at least a portion of the first electrode and the second electrode, and a control circuitry. The control circuitry is configured to receive information on the at least one pre-determined dimension of the reference object and the image data of at least one captured image, detect a first pixel representation and a second pixel representation in the at least one captured image, wherein the first pixel representation is associated to the at least one pre-determined dimension of the reference object and the second pixel representation is associated to the gap between the first electrode and the second electrode. The control circuitry is further configured to determine a pixel dimension of a pixel element in the at least one image based on the first pixel representation and the at least one pre-determined dimension, and determine the gap based on the second pixel representation and the pixel dimension.

The maintenance arrangement according to the present disclosure allows an accurate measurement of the gap between two electrodes indicating a degradation- and/or wear rate of the spark plug. Particularly, a predictive maintenance technology utilizing a computer aided engineering (CAE) analysis enables an early estimation when a maintenance job is required. Accordingly, a lifespan or a defect of a component or a subsystem of the vehicle can be identified at an early stage and an operation of the respective component can be continued or adjusted accordingly.

The spark plug may be adapted to generate an electric spark by an ignition voltage current provided between the first electrode and the second electrode, for instance to ignite a compressed fuel/air mixture in a spark-ignition engine. The spark plug may be formed cylindrically and the first electrode may extend in a center of a spark plug body along an axial direction of the spark plug. Whereas, the second electrode may be arranged facing the first electrode and spaced apart from the spark plug body. In other words, the second electrode may act as a ground electrode.

Such spark plug may be gradually worn overtime due to a high temperature, an ignition flame and/or the fuel/air mixture affecting materials of the spark plug. The degradation rate or the wear rate of the spark plug, particularly in an ignition area between the first electrode and the second electrode may be correlated with the gap between the first electrode and the second electrode. In other words, the degradation rate or the wear rate of the spark plug may correspond to a deviation of a measured distance between the first electrode and the second electrode from the distance between the first electrode and the second electrode in a manufacturing and/or assembling state.

The arrangement is adapted to measure the gap between the first electrode and the second electrode to predict a wear state of the spark plug. The reference object may be adapted to provide a gauge and/or a reference value for the gap between the first electrode and the second electrode. Accordingly, at least one dimension of the reference object may need to be known. The reference object may comprise any shape. For instance, the reference object may be bar-shaped and at least a width and/or a length of the bar-shaped reference object may be pre-determined or measured before the reference object is mounted in place.

The reference object may be arranged in the proximity of the spark plug, preferably the first electrode and the second electrode in order to provide the reference value for a gap size. The gap size may refer to a distance between the first electrode and the second electrode of the spark plug. Further, the reference object may be arranged parallel or perpendicular direction relative to an arrangement direction of the first electrode and the second electrode. However, the arrangement direction of the reference object may be not limited thereto.

The imaging device comprises at least one optical sensing element, which is able to capture one, preferably several images of a combination of the reference object, the first electrode and the second electrode and generate image data thereof. The imaging device may comprise a camera.

The control circuitry may include, for example, one or more central processing units (CPUs), graphics processing units (GPUs) dedicated to performing calculations/transactions and/or other processing devices. The control circuitry may be able to communicate, control and/or retrieve information from the imaging device via wired or wireless connection. The control circuitry may be further adapted to determine the gap size between the first electrode and the second electrode in the captured image. Accordingly, the control circuitry may collect information on the at least one dimension of the reference object and the image data of the at least one captured image.

The control circuitry may be further able to analyze pixels of the at least one captured image. In particular, the control circuitry may classify the pixels into the first pixel representation associated to the reference object and the second pixel representation associated to the ignition area between the first electrode and the second electrode. In other words, the control circuitry may be able to identify the pixels related to the reference object, preferably the pre-determined dimension of the reference object and the gap between the first electrode and the second electrode to be determined.

Since the reference value, i.e. the at least one dimension of the reference object is known, the pixel dimension of the first pixel representation and the pixel dimension of the second pixel representation may be correlated with the at least one pre-determined dimension of the reference object. For instance, the at least one dimension of the reference object may correspond to a certain number of pixels. Accordingly, the dimension and/or size of the pixel may be recalculated into a numerical scale using mm, inch, etc. For instance, a resolution may be represented by mm/pixel.

Hence, the control circuitry is capable to determine the size of the gap based on the number of pixels between the first electrode and the second electrode and numerical scale of each pixel. Accordingly, the wear measurement of the spark plug is facilitated.

In an example, the arrangement further comprises a container. The container has a plurality of walls forming an inner volume. The reference object is attached to at least one inner surface of the plurality of walls. The container may form a housing of the arrangement accommodating the reference object and/or at least a part of the imaging device. The container may be also adapted to receive at least a part of the spark plug, particularly the first electrode and the second electrode.

The container may comprise various shapes such as a cuboid, a cube, a pyramid, a cylinder, a prism, etc. The container may comprise an interior and/or the inner volume defined by the plurality of walls surrounding the interior. The reference object may be fixedly mounted on at least one inner surface of the plurality of walls, wherein the inner surface directs to the inner volume. The reference object may be also held by two or more inner surfaces of the plurality of walls. Accordingly, the reference object may be securely positioned inside the container to provide a reliable reference value to the captured image.

In an example, the arrangement further comprises a spark plug holder. The spark plug holder is arranged to receive a spark plug and the spark plug holder is attached to the at least one inner surface. The spark plug holder may be adapted to fixedly hold the spark plug at the container. Thus, the spark plug holder may form an interface between the spark plug and the container. The spark plug holder may be fixedly and/or releasably attached to the at least one inner surface of the plurality of walls of the container. Alternatively, the spark plug holder may be integrally formed with the at least one inner surface of the plurality of walls.

The at least one of walls of the container and/or the spark plug holder may comprise a through-hole, through which at least a portion of the spark plug comprising at least the first electrode and the second electrode may be inserted into the container. The spark plug holder may be arranged to firmly hold the spark plug at the interior of the container. The spark plug holder may be also attached to two or more inner surfaces of the container to ensure a firm assembly of the spark plug inside the container.

In an example, at least one portion of one of the plurality of walls is at least partially transparent or comprises a light source diffuser. The reference object is placed between the at least partially transparent portion of the wall or the light source diffuser and a sensing part of the imaging device allowing the sensing part to face the at least partially transparent portion of wall or the light source diffuser.

The imaging device may comprise the sensing part configured to generate image data. The sensing part may be arranged to face the reference object and/or the spark plug, particularly the first electrode and the second electrode to reliably capture the images. The container may comprise at least a transparent portion in at least one of the plurality of walls. The transparent portion may comprise a transparent material such as a glass or an acrylic glass, through which light may penetrate without any reflection. The at least one of the walls of the container may comprise at least partially the transparent portion or the wall may be formed completely transparent. The container may comprise two or more walls comprising at least partially the transparent portion. Alternatively, the container may be formed completely transparent.

As an alternative to the transparent portion, the wall may comprise the light source diffuser. The light source diffuser may be adapted to evenly distribute the light source contacting a surface of the light source diffuser. Accordingly, the at least one image captured by the imaging device, preferably, by the sensing part may not be affected by a shadow caused by a reflection of any light.

The reference object and the spark plug may be arranged between the imaging device, preferably the sensing part and the transparent portion of the wall or the light source diffuser. To maximize an effect of the transparent portion of the wall or the light source diffuser, the sensing part may be arranged to face the transparent portion of the wall or the light source diffuser through the reference object and the spark plug. In other words, they may be arranged in an order of reference sensing part, reference object, spark plug and the transparent portion of the wall or the light source diffuser.

In an example, the at least one pre-determined dimension is at least one of length, width, and diameter of the reference object. The at least one pre-determined dimension of the reference object may specify a size of the reference object. Accordingly, the reference object may enable providing the reference value to the image data captured by the imaging device, which may facilitate to estimate the size of the gap between the first electrode and the second electrode.

In an example, the control circuitry is further configured to, when detecting the first pixel representation and the second pixel representation, determine pixel intensity values for each pixel element within at least one captured image, classify the pixel intensity values based on a pixel intensity threshold is decisive of whether the pixel intensity values are classified as a background or a foreground, and sum the classified pixel intensity values of each pixel element in a first direction and a second direction within each captured image, respectively, to form a first intensity summation chart and a second intensity summation chart so to identify the first pixel representation and the second pixel representation.

When the control circuitry detects the first pixel representation associated to the at least one pre-determined dimension and the second pixel representation associated to the gap between the first electrode and the second electrode in the captured image, the control circuitry may be able to determine the pixel intensity value for each pixel element of the captured image. The pixel intensity value may be determined based on 3 layers, each of which is designated to one of RGB (red, green, blue) colors respectively in form of a two dimensional matrix comprising the first direction and the second direction, which may form a two dimensional coordinate.

The control circuitry may be further capable to classify the pixel intensity values determined to each pixel element into the foreground or the background within the captured image. Accordingly, the control circuitry may apply the pixel intensity threshold to decide whether the pixel intensity value of each pixel element indicates the foreground or background in the image being analyzed. For instance, the control circuitry may regard the pixel intensity values above the pixel intensity threshold as the foreground and the pixel intensity values under the pixel intensity threshold as the background.

The control circuitry may be further adapted to create the first intensity summation chart and the second intensity summation chart. The first intensity summation chart may be based on a sum of the classified pixel intensity values in the first direction and the second intensity summation chart may be based on a sum of the classified pixel intensity values in the second direction.

In an example, the control circuitry is further configured to, during detecting the first pixel representation and the second pixel representation, identify areas in the first intensity summation chart and the second intensity summation chart. Each area is indicative of the first pixel representation and the second pixel representation.

By comparing the first intensity summation chart and the second intensity summation chart, the control circuitry may be able to determine the area of interest, i.e. the first pixel representation and the second pixel representation, in the captured image. Accordingly, the control circuitry may enable an automated detection of the gap between the first electrode and the second electrode of the spark plug in the captured image, which may facilitate the predictive maintenance of the spark plug.

In an example, the foreground is the reference object and the spark plug. The control circuitry may be adapted to identify the reference object and the spark plug as the foreground based on the classification of the pixel intensity values.

In an example, the arrangement further comprises a manually operable input switch configured to initiate a measurement of the gap. The manually operable input switch may be adapted to receive an operational command from a user to measure the gap between the first electrode and the second electrode of the spark plug. The input switch may be arranged directly at the container and/or in a mobile controller. The input switch may comprise a mechanical switch element, such as a push button and/or an electronic switch element.

The input switch may be coupled with one or more illuminating elements having a different color from each other. Alternatively, the input switch may be coupled with a single illuminating element illuminating different colors, for instance by utilizing an LED light source. The different colors may indicate a status of the arrangement, for instance ready for operation, capturing an image, processing image data, etc. Additionally, the light source coupled with the input switch may be able to provide a warning signal of one or more error functions of the arrangement. The warning signal may be for instance a blink of a light source. Accordingly, the user may be able to monitor an operational state of the arrangement easily and visually.

In an example, the control circuitry is configured to transmit the gap information to a cloud computing device. The arrangement for measuring the gap may be couplable with at least one data storage unit. The control circuitry may comprise a wireless network element configured to communicate with an external computing device over the air. The wireless network element may comprise LTE, 5G, Wi-Fi, Bluetooth, NFC, etc. The control circuitry may thus transmit the determined gap information of an individual spark plug to the cloud computing device via the wireless network element.

The cloud computing device may be configured to receive gap information from each control circuitry of one or more arrangement and analyze the gap information. The cloud computing device may allow users located different areas to share the gap information to improve the predictive maintenance of the spark plug. Additionally, the cloud computing device may enable an assessment of the spark plug with respect to its specification and/or requirements based on the gap information shared over the air.

In an example, the control circuitry is configured to determine the pixel dimension of the pixel element and the gap by means of a trained learning algorithm. Since the control circuitry may enable an automated detection of the first pixel representation associated to the at least one pre-determined dimension of the reference object and the second pixel representation associated to the gap between the first electrode and the second electrode and an automated determination of the gap, preferably the size of the gap, the control circuitry may be also able to improve the detection and the measurement by the machine learning algorithm. In particular, the trained/machine learning algorithm may improve a correlation of the gap determined automatically and a wear state of the spark plug, thus to improve the predictive maintenance of the spark plug.

In an example, the arrangement may further comprise a displaying unit configured to display the captured images and/or measurement results, i.e. the determined gap between the first electrode and the second electrode. The displaying unit may be positioned directly at the arrangement and/or an external monitor. The displaying unit may be also a part of a computer of the user. The control circuitry may be configured to transfer data to the displaying unit via the wireless network element. Further, the control circuitry may be able to integrate the measurement results onto the respective captured image, which may be also displayed in the displaying unit.

According to the present disclosure, a method for measuring a gap between a first electrode and a second electrode of a spark plug is presented. The method comprises the steps of, but not necessarily in this order:
- capturing at least one image of a combination of a reference object having at least one pre-determined dimension and at least a portion of the first electrode and the second electrode,
- detecting a first pixel representation and a second pixel representation in the at least one captured image, the first pixel representation being associated to the pre-determined dimension of the reference object and the second pixel representation being associated to the gap between the first electrode and the second electrode,
- determining a pixel dimension of a pixel element in the at least one image based on the first pixel representation and the at least one pre-determined dimension, and
- determining the gap based on the second pixel representation and the pixel dimension, and
- detecting a wear state of the spark plug based on the determined gap.

In an example, the method further comprises the steps of
- determining pixel intensity values for each pixel element within the at least one captured image,
- classifying the pixel intensity values based on a pixel intensity threshold being decisive of whether the pixel intensity values are classified as background or foreground, and
- summing the classified pixel intensity values of each pixel element in a first direction and/or a second direction within each captured image, respectively, to form a first intensity summation chart and a second intensity summation chart so to identify the first pixel representation and the second pixel representation.

In an example, the step of detecting further comprises identifying areas in the first intensity summation chart and the second intensity summation chart, wherein each area is indicative of the first pixel representation and the second pixel representation.

The method for measuring a gap between a first electrode and a second electrode of a spark plug may be automatically implemented, preferably by a computer. Accordingly, detection of a wear state of the spark plug is facilitated through and its maintenance work may be reliably predicted. In other words, a lifespan or a defect of the spark plug, particularly a degradation of an ignition part of the spark plug may be estimated at an early stage, which may prevent from a breakdown of the spark plug in time.

According to the present disclosure, a computer storage medium is presented. The computer storage medium is configured for storing an executable computer program that, when executed, causes one of a computer and a control circuitry to perform the above described method.

The computer storage medium may comprise at least one memory device in any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the control circuitry .

Each memory device may store any suitable instructions, data or information, including a computer program, software, an application including one or more of logic, rules, code, tables, etc. and/or other instructions capable of being executed by the control circuitry. Memory device may be used to store any calculations/transactions/operations made by control circuitry and the camera device and/or any data received via e.g. output interfaces thereof. In some embodiments, the control circuitry and the memory device are integrated.

Each memory device may also store data that can be retrieved, manipulated, created, or stored by the control circuitry. The data may include, for instance, local updates, parameters, learning models, user data, image data. The data can be stored in one or more databases connected to the circuitry e.g. a cloud device. The control circuitry may store a trained learning algorithm which, e.g. may be further utilized to detect the first pixel representation and a second pixel representation, determine pixel dimensions of a pixel element and determine the gap.

The one or more databases can be connected to the server by a high bandwidth field area network (FAN) or wide area network (WAN), or can also be connected to the server through a wireless communication network.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically and exemplarily an example of an arrangement for measuring a gap between a first electrode and a second electrode of a spark plug according to the present disclosure.
- Fig. 2: shows schematically and exemplarily an example of a flow chart of a method for measuring a gap between a first electrode and a second electrode of a spark plug according to the present disclosure.
- Fig. 3: shows schematically and exemplarily an example of a captured image of a gap between a first electrode and a second electrode of a spark plug according to the present disclosure.
- Fig. 4: shows schematically and exemplarily an example of a captured image of a gap between a first electrode and a second electrode of a spark plug according to the present disclosure.

### DESCRIPTION OF EXAMPLES

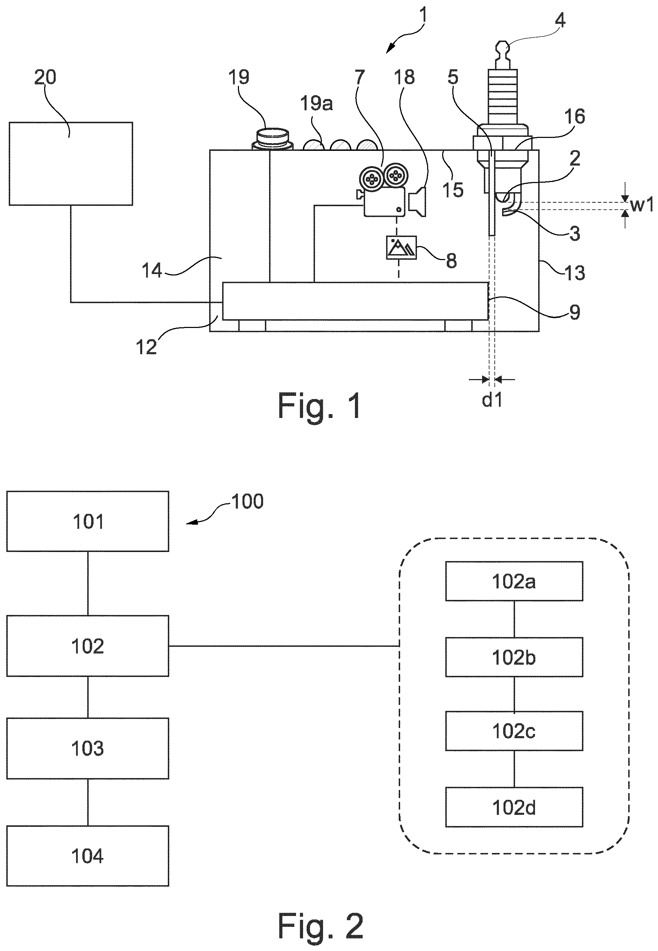

Fig. 1 shows an arrangement 1 suitable for measuring a gap w1 between a first electrode 2 and a second electrode 3 of a spark plug 4. The arrangement 1 comprises a reference object 5 having at least one pre-determined dimension d1, an imaging device 7 configured to capture at least one image 8 of the reference object 5 and at least a portion of the first electrode 2 and the second electrode 3 and a control circuitry 9. The imaging device 7 comprise a sensing part comprising at least one optical sensing element to generate image data. The at least one pre-determined dimension d1 is at least one of length, width, and diameter of the reference object 5.

The arrangement 1 further comprises a container 12 and a spark plug holder 16. The container 12 has a plurality of walls 13 forming an inner volume 14. The reference object 5 is attached to at least one inner surface 15 of the plurality of walls 13. The imaging device 7 may be also positioned inside the container 12. The spark plug holder 16 is arranged to receive the spark plug 4 and the spark plug holder 16 is attached to the at least one inner surface 15 as well.

The control circuitry 9 may include one or more central processing units (CPUs), graphics processing units (GPUs) dedicated to performing calculations/ transactions and/or other processing devices. The control circuitry may be able to communicate, control and/or retrieve information from the imaging device via wired or wireless connection. Preferably, the control circuitry 9 is configured to communicate with a cloud computing device.

Further, at least one portion of one of the plurality of walls 13 is transparent or comprises a light source diffuser. The reference object 5 is placed between the at least partially transparent portion of the wall or the light source diffuser and the sensing part 18 of the imaging device 7 allowing the sensing part 18 to face the at least partially transparent portion of wall or the light source diffuser.

The arrangement further comprises a manually operable input switch 19 configured to initiate a measurement of the gap w1. The input switch 19 is arranged at the container 12. The input switch 19 comprises a push button to be operated by a user. The input switch 19 is coupled with illuminating elements 19a having a different color from each other. The different colors may indicate a status of the arrangement 1.

The arrangement may further comprise a displaying unit (not shown) configured to display the captured images and/or measurement results, i.e. the determined gap between the first electrode and the second electrode.

The control circuitry is configured to perform the steps as shown in Fig. 2 by means of a computer-implemented method utilizing a trained learning system. The control circuitry 9 is adapted to perform the following steps, but not necessarily in this order:

| | |
|---|---|
| 101: | capturing at least one image 8 of a reference object 5 having at least one pre-determined dimension d1 and at least a portion of the first electrode 2 and the second electrode 3. |
| 102: | detecting a first pixel representation 10 and a second pixel representation 11 in the at least one captured image 8, wherein the first pixel representation 10 is associated to the pre-determined dimension d1 of the reference object 5 and the second pixel representation 11 is associated to the gap w1 between the first electrode 2 and the second electrode 3. |
| 102a: | determining pixel intensity values for each pixel element within the at least one captured image 8. |
| 102b: | classifying the pixel intensity values based on a pixel intensity threshold being decisive of whether the pixel intensity values are classified as background or foreground, wherein foreground is the reference object 5 and the spark plug 4. |
| 102c: | summing the classified pixel intensity values of each pixel element in a first direction X and/or a second direction Y within each captured image 8, respectively, to form a first intensity summation chart 21 and a second intensity summation chart 22 so to identify the first pixel representation 10 and the second pixel representation 11. |
| 102d: | identifying areas in the first intensity summation chart 21 and the second intensity summation chart 22, wherein each area is indicative of the first pixel representation 10 and the second pixel representation 11. |
| 103: | determining a pixel dimension of a pixel element in the at least one image based on the first pixel representation 10 and the at least one pre-determined dimension d1. |
| 104: | determining the gap based on the second pixel representation and the pixel dimension. |

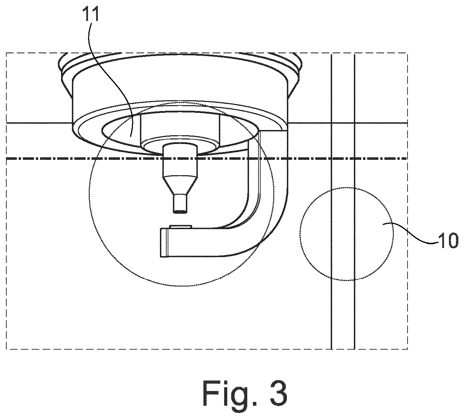

Fig. 3 shows an image 8 captured by the imaging device 7. The captured image 8 comprises the first pixel representation 10 associated to the at least one pre-determined dimension d1 of the reference object 5 and the second pixel representation 11 associated to the gap w1 between the first electrode 2 and the second electrode 3.

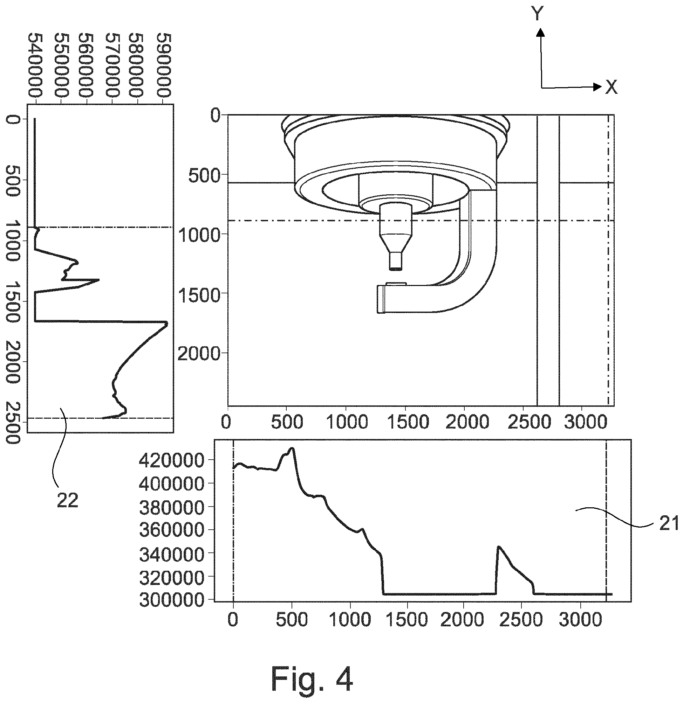

Fig. 4 shows the captured image 8 with the first intensity summation chart 21 and the second intensity summation chart 22. The first intensity summation chart is based on a sum of the classified pixel intensity values in the first direction X and the second intensity summation chart 22 is based on a sum of the classified pixel intensity values in the second direction Y. By comparing the first intensity summation chart 21 and the second intensity summation chart 22, the control circuitry 9 is able to determine the area of interest, i.e. the first pixel representation 10 and the second pixel representation 11, in the captured image 8.

It has to be noted that examples of the disclosure are described with reference to different subject matters. In particular, some examples are described with reference to method type claims whereas other examples are described with reference to the device type claims.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. An arrangement (1) for measuring a gap (w1) between a first electrode (2) and a second electrode (3) of a spark plug (4), comprising
- a reference object (5) having at least one pre-determined dimension (d1),
- an imaging device (7) configured to capture at least one image (8) of a combination of the reference object (5) and at least a portion of the first electrode (2) and the second electrode (3), and
- a control circuitry (9) configured to
- receive information on the at least one pre-determined dimension (d1) of the reference object (5) and the image data of at least one captured image (8),
- detect a first pixel representation (10) and a second pixel representation (11) in the at least one captured image (8), the first pixel representation (10) being associated to the at least one pre-determined dimension (d1) of the reference object (5) and the second pixel representation (11) being associated to the gap (w1) between the first electrode (2) and the second electrode (3),
- determine a pixel dimension of a pixel element in the at least one image (8) based on the first pixel representation (10) and the at least one pre-determined dimension (d1),
- determine the gap (w1) based on the second pixel representation (11) and the pixel dimension, and
- detect a wear state of the spark plug (4) based on the determined gap (w1).

2. The arrangement (1) according to claim 1, further comprising a container (12), the container (12) having a plurality of walls (13) forming an inner volume (14), the reference object (5) being attached to at least one inner surface (15) of the plurality of walls (13).

3. The arrangement (1) according to claim 2, comprising a spark plug holder (16), the spark plug holder (16) being arranged to receive the spark plug (4) and the spark plug holder (16) being attached to the at least one inner surface (15)

4. The arrangement (1) according to claim 2 or 3, at least one portion of one of the plurality of walls (13) being at least partially transparent or comprises a light source diffuser, and
the reference object (5) being placed between the at least partially transparent portion of the wall or the light source diffuser and a sensing part (18) of the imaging device (7), allowing the sensing part (18) to face the at least partially transparent portion of wall or the light source diffuser.

5. The arrangement (1) any of the preceding claims, the at least one pre-determined dimension (d1) is at least one of length, width, and diameter of the reference object (5).

6. The arrangement (1) any of the preceding claims, the control circuitry (9) is further configured to, when detecting the first pixel representation (10) and the second pixel representation (11),
- determine pixel intensity values for each pixel element within at least one captured image (8);
- classify the pixel intensity values based on a pixel intensity threshold being decisive of whether the pixel intensity values are classified as a background or a foreground; and
- sum the classified pixel intensity values of each pixel element in a first direction (X) and a second direction (Y) within each captured image, respectively, to form a first intensity summation chart (21) and a second intensity summation chart (22) so to identify the first pixel representation (10) and the second pixel representation (11).

7. The arrangement (1) according to claim 6, the foreground being the reference object (5) and the spark plug (4).

8. The arrangement (1) according to claim 6 or 7, the control circuitry (9) being further configured to, during detecting the first pixel representation (10) and the second pixel representation (11), identify areas in the first intensity summation chart (21) and the second intensity summation chart (22), each area being indicative of the first pixel representation (10) and the second pixel representation (11).

9. The arrangement (1) according to any of the preceding claims, further comprising a manually operable input switch (19) configured to initiate a measurement of the gap (w1).

10. The arrangement (1) according to any of the preceding claims, the control circuitry being configured to transmit the gap (w1) information to a cloud computing device.

11. The arrangement (1) according to any of the preceding claims, the control circuitry (9) being configured to determine the pixel dimension of the pixel element and the gap (w1) by means of a trained learning algorithm.

12. A method (100) for measuring a gap (w1) between a first electrode (2) and a second electrode (3) of a spark plug (4) comprising the steps of
- capturing (101) at least one image (8) of a combination of a reference object (5) having at least one pre-determined dimension (d1) and at least a portion of the first electrode (2) and the second electrode (3),
- detecting (102) a first pixel representation (10) and a second pixel representation (11) in the at least one captured image (8), the first pixel representation (10) being associated to the pre-determined dimension (d1) of the reference object (5) and the second pixel representation (11) being associated to the gap (w1) between the first electrode (2) and the second electrode (3),
- determining (103) a pixel dimension of a pixel element in the at least one image (8) based on the first pixel representation (10) and the at least one pre-determined dimension (d1),
- determining (104) the gap (w1) based on the second pixel representation (11) and the pixel dimension, and
- detecting a wear state of the spark plug (4) based on the determined gap (w1).

13. The method (100) according to claim 12, the step of detecting (102) comprising
- determining (102a) pixel intensity values for each pixel element within the at least one captured image (8);
- classifying (102b) the pixel intensity values based on a pixel intensity threshold being decisive of whether the pixel intensity values are classified as background or foreground; and
- summing (102c) the classified pixel intensity values of each pixel element in a first direction (X) and/or a second direction (Y) within each captured image (8), respectively, to form a first intensity summation chart (21) and a second intensity summation chart (22) so to identify the first pixel representation (10) and the second pixel representation (11).

14. The method according to claim 12 or 13, the step of detecting (102) further comprising identifying (102d) areas in the first intensity summation chart (21) and the second intensity summation chart (22), each area being indicative of the first pixel representation (10) and the second pixel representation (11).

15. A computer storage medium storing an executable computer program that, when executed, causes one of a computer and a control circuitry (9) to perform the method in accordance with any one of the claims 12 to 14.

## Patentansprüche

1. Anordnung (1) zum Messen eines Spalts (w1) zwischen einer ersten Elektrode (2) und einer zweiten Elektrode (3) einer Zündkerze (4), umfassend
- ein Referenzobjekt (5) mit mindestens einer vorbestimmten Abmessung (d1),
- eine Bildgebungsvorrichtung (7), die dazu ausgelegt ist, mindestens ein Bild (8) einer Kombination des Referenzobjekts (5) und mindestens eines Teils der ersten Elektrode (2) und der zweiten Elektrode (3) aufzunehmen, und
- eine Steuerschaltung (9), die zu Folgendem ausgelegt ist:
- Empfangen von Informationen über die mindestens eine vorbestimmte Abmessung (d1) des Referenzobjekts (5) und der Bilddaten mindestens eines aufgenommenen Bildes (8),
- Detektieren einer ersten Pixeldarstellung (10) und einer zweiten Pixeldarstellung (11) in dem mindestens einen aufgenommenen Bild (8), wobei die erste Pixeldarstellung (10) mit der mindestens einen vorbestimmten Abmessung (d1) des Referenzobjekts (5) verknüpft ist und die zweite Pixeldarstellung (11) mit dem Spalt (w1) zwischen der ersten Elektrode (2) und der zweiten Elektrode (3) verknüpft ist,
- Bestimmen einer Pixelabmessung eines Pixelelements in dem mindestens einen Bild (8) basierend auf der ersten Pixeldarstellung (10) und der mindestens einen vorbestimmten Abmessung (d1),
- Bestimmen des Spalts (w1) basierend auf der zweiten Pixeldarstellung (11) und der Pixelabmessung und
- Detektieren eines Verschleißzustands der Zündkerze (4) anhand des bestimmten Spalts (w1).

2. Anordnung (1) nach Anspruch 1, ferner einen Behälter (12) umfassend, wobei der Behälter (12) mehrere Wände (13) aufweist, die ein Innenvolumen (14) bilden, wobei das Referenzobjekt (5) an mindestens einer Innenfläche (15) der mehreren Wände (13) angebracht ist.

3. Anordnung (1) nach Anspruch 2, einen Zündkerzenhalter (16) umfassend, wobei der Zündkerzenhalter (16) zur Aufnahme der Zündkerze (4) ausgelegt ist und der Zündkerzenhalter (16) an der mindestens einen Innenfläche (15) befestigt ist.

4. Anordnung (1) nach Anspruch 2 oder 3, wobei mindestens ein Teil einer der mehreren Wände (13) mindestens teilweise transparent ist oder einen Lichtquellendiffusor umfasst, und
wobei das Referenzobjekt (5) zwischen dem mindestens teilweise transparenten Teil der Wand oder dem Lichtquellendiffusor und einem Erfassungsteil (18) der Bildgebungsvorrichtung (7) platziert ist, wodurch ermöglicht wird, dass der Erfassungsteil (18) dem mindestens teilweise transparenten Teil der Wand oder dem Lichtquellendiffusor zugewandt ist.

5. Anordnung (1) nach einem der vorhergehenden Ansprüche, wobei die mindestens eine vorbestimmte Abmessung (d1) mindestens eines von Länge, Breite und Durchmesser des Referenzobjekts (5) ist.

6. Anordnung (1) nach einem der vorhergehenden Ansprüche, wobei die Steuerschaltung (9), beim Detektieren der ersten Pixeldarstellung (10) und der zweiten Pixeldarstellung (11), ferner zu Folgendem ausgelegt ist,
- Bestimmen von Pixelintensitätswerten für jedes Pixelelement innerhalb mindestens eines aufgenommenen Bildes (8);
- Klassifizieren der Pixelintensitätswerte basierend auf einem Pixelintensitäts-Schwellenwert, der entscheidend dafür ist, ob die Pixelintensitätswerte als Hintergrund oder Vordergrund klassifiziert werden; und
- Summieren der klassifizierten Pixelintensitätswerte jedes Pixelelements in einer ersten Richtung (X) bzw. einer zweiten Richtung (Y) innerhalb jedes aufgenommenen Bildes, um ein erstes Intensitätssummierungsdiagramm (21) und ein zweites Intensitätssummierungsdiagramm (22) zu bilden, um die erste Pixeldarstellung (10) und die zweite Pixeldarstellung (11) zu identifizieren.

7. Anordnung (1) nach Anspruch 6, wobei der Vordergrund das Referenzobjekt (5) und die Zündkerze (4) sind.

8. Anordnung (1) nach Anspruch 6 oder 7, wobei die Steuerschaltung (9) ferner dazu ausgelegt ist, während des Detektierens der ersten Pixeldarstellung (10) und der zweiten Pixeldarstellung (11) Bereiche in dem ersten Intensitätssummierungsdiagramm (21) und dem zweiten Intensitätssummierungsdiagramm (22) zu identifizieren, wobei jeder Bereich indikativ für die erste Pixeldarstellung (10) bzw. die zweite Pixeldarstellung (11) ist.

9. Anordnung (1) nach einem der vorhergehenden Ansprüche, ferner einen manuell betätigbaren Eingabeschalter (19) umfassend, der dazu ausgelegt ist, eine Messung des Spalts (w1) zu veranlassen.

10. Anordnung (1) nach einem der vorhergehenden Ansprüche, wobei die Steuerschaltung dazu ausgelegt ist, die Spalt (w1) -informationen an eine Cloud-Rechenvorrichtung zu übertragen.

11. Anordnung (1) nach einem der vorhergehenden Ansprüche, wobei die Steuerschaltung (9) dazu ausgelegt ist, die Pixelabmessung des Pixelelements und den Spalt (w1) mittels eines trainierten Lernalgorithmus zu bestimmen.

12. Verfahren (100) zum Messen eines Spalts (w1) zwischen einer ersten Elektrode (2) und einer zweiten Elektrode (3) einer Zündkerze (4), die Schritte umfassend
- Aufnehmen (101) mindestens eines Bildes (8) einer Kombination eines Referenzobjekts (5) mit mindestens einer vorbestimmten Abmessung (d1) und mindestens eines Teils der ersten Elektrode (2) und der zweiten Elektrode (3),
- Detektieren (102) einer ersten Pixeldarstellung (10) und einer zweiten Pixeldarstellung (11) in dem mindestens einen aufgenommenen Bild (8), wobei die erste Pixeldarstellung (10) mit der vorbestimmten Abmessung (d1) des Referenzobjekts (5) verknüpft ist und die zweite Pixeldarstellung (11) mit dem Spalt (w1) zwischen der ersten Elektrode (2) und der zweiten Elektrode (3) verknüpft ist,
- Bestimmen (103) einer Pixelabmessung eines Pixelelements in dem mindestens einen Bild (8) basierend auf der ersten Pixeldarstellung (10) und der mindestens einen vorbestimmten Abmessung (d1),
- Bestimmen (104) des Spalts (w1) basierend auf der zweiten Pixeldarstellung (11) und der Pixelabmessung und
- Detektieren eines Verschleißzustands der Zündkerze (4) anhand des bestimmten Spalts (w1).

13. Verfahren (100) nach Anspruch 12, wobei der Schritt des Detektierens (102) umfasst
- Bestimmen (102a) von Pixelintensitätswerten für jedes Pixelelement innerhalb des mindestens einen aufgenommenen Bildes (8);
- Klassifizieren (102b) der Pixelintensitätswerte basierend auf einem Pixelintensitäts-Schwellenwert, der entscheidend dafür ist, ob die Pixelintensitätswerte als Hintergrund oder Vordergrund klassifiziert werden; und
- Summieren (102c) der klassifizierten Pixelintensitätswerte jedes Pixelelements in einer ersten Richtung (X) bzw. einer zweiten Richtung (Y) innerhalb jedes aufgenommenen Bildes (8), um ein erstes Intensitätssummierungsdiagramm (21) und ein zweites Intensitätssummierungsdiagramm (22) zu bilden, um die erste Pixeldarstellung (10) und die zweite Pixeldarstellung (11) zu identifizieren.

14. Verfahren nach Anspruch 12 oder 13, wobei der Schritt des Detektierens (102) ferner das Identifizieren (102d) von Bereichen im ersten Intensitätssummierungsdiagramm (21) und im zweiten Intensitätssummierungsdiagramm (22) umfasst, wobei jeder Bereich indikativ für die erste Pixeldarstellung (10) und die zweite Pixeldarstellung (11) ist.

15. Computerspeichermedium, das ein ausführbares Computerprogramm speichert, das bei Ausführung einen Computer oder eine Steuerschaltung (9) veranlasst, das Verfahren nach einem der Ansprüche 12 bis 14 durchzuführen.

## Revendications

1. Agencement (1) de mesure d'un écartement (w1) entre une première électrode (2) et une deuxième électrode (3) d'une bougie d'allumage (4), comprenant
- un objet de référence (5) présentant au moins une dimension prédéterminée (d1),
- un dispositif d'imagerie (7) configuré pour capturer au moins une image (8) d'une combinaison de l'objet de référence (5) et d'au moins une partie de la première électrode (2) et de la deuxième électrode (3), et
- une circuiterie de commande (9) configurée pour
- recevoir des informations relatives à l'au moins une dimension prédéterminée (d1) de l'objet de référence (5) et les données d'image d'au moins une image capturée (8),
- détecter une première représentation de pixels (10) et une deuxième représentation de pixels (11) dans l'au moins une image capturée (8), la première représentation de pixels (10) étant associée à l'au moins une dimension prédéterminée (d1) de l'objet de référence (5) et la deuxième représentation de pixels (11) étant associée à l'écartement (w1) entre la première électrode (2) et la deuxième électrode (3),
- déterminer une dimension de pixel d'un élément pixel dans l'au moins une image (8) sur la base de la première représentation de pixels (10) et de l'au moins une dimension prédéterminée (d1),
- déterminer l'écartement (w1) sur la base de la deuxième représentation de pixels (11) et de la dimension de pixel, et
- détecter un état d'usure de la bougie d'allumage (4) sur la base de l'écartement (w1) déterminé.

2. Agencement (1) selon la revendication 1, comprenant en outre une enceinte (12), l'enceinte (12) présentant une pluralité de parois (13) formant un volume interne (14), l'objet de référence (5) étant fixé à au moins une surface interne (15) de la pluralité de parois (13).

3. Agencement (1) selon la revendication 2, comprenant un porte-bougie d'allumage (16), le porte-bougie d'allumage (16) étant agencé de manière à recevoir la bougie d'allumage (4) et le porte-bougie d'allumage (16) étant fixé sur l'au moins une surface interne (15).

4. Agencement (1) selon la revendication 2 ou 3, au moins une partie de l'une de la pluralité de parois (13) étant au moins partiellement transparente ou comprenant un diffuseur de source de lumière, et
l'objet de référence (5) étant placé entre la partie au moins partiellement transparente de la paroi ou le diffuseur de source de lumière et un composant de détection (18) du dispositif d'imagerie (7), pour ainsi permettre au composant de détection (18) de faire face à la partie au moins partiellement transparente de la paroi ou au diffuseur de source de lumière.

5. Agencement (1) selon l'une quelconque des revendications précédentes, l'au moins une dimension prédéterminée (d1) étant au moins une dimension parmi une longueur, une largeur et un diamètre de l'objet de référence (5).

6. Agencement (1) selon l'une quelconque des revendications précédentes, la circuiterie de commande (9) étant en outre configurée, lors de la détection de la première représentation de pixels (10) et de la deuxième représentation de pixels (11), pour
- déterminer des valeurs d'intensité de pixel pour chaque élément pixel au sein de l'au moins une image capturée (8) ;
- classifier les valeurs d'intensité de pixel sur la base d'un seuil d'intensité de pixel servant à déterminer si les valeurs d'intensité de pixel sont classifiées comme arrière-plan ou comme avant-plan ; et
- sommer les valeurs d'intensité de pixel classifiées de chaque élément pixel selon une première direction (X) et une deuxième direction (Y) au sein de chaque image capturée afin de former respectivement une première représentation graphique de sommation d'intensités (21) et une deuxième représentation graphique de sommation d'intensités (22) de manière à identifier la première représentation de pixels (10) et la deuxième représentation de pixels (11).

7. Agencement (1) selon la revendication 6, l'avant-plan étant l'objet de référence (5) et la bougie d'allumage (4).

8. Agencement (1) selon la revendication 6 ou 7, la circuiterie de commande (9) étant en outre configurée, lors de la détection de la première représentation de pixels (10) et de la deuxième représentation de pixels (11), pour identifier des zones dans la première représentation graphique de sommation d'intensités (21) et la deuxième représentation graphique de sommation d'intensités (22), chaque zone étant représentative de la première représentation de pixels (10) et de la deuxième représentation de pixels (11).

9. Agencement (1) selon l'une quelconque des revendications précédentes, comprenant en outre un commutateur d'entrée à commande manuelle (19) configuré pour déclencher une mesure de l'écartement (w1).

10. Agencement (1) selon l'une quelconque des revendications précédentes, la circuiterie de commande étant configurée pour transmettre les informations relatives à l'écartement (w1) à un dispositif de l'informatique en nuage.

11. Agencement (1) selon l'une quelconque des revendications précédentes, la circuiterie de commande (9) étant configurée pour déterminer la dimension de pixel de l'élément pixel et de l'écartement (w1) au moyen d'un algorithme d'apprentissage entraîné.

12. Procédé (100) de mesure d'un écartement (w1) entre une première électrode (2) et une deuxième électrode (3) d'une bougie d'allumage (4), comprenant les étapes suivantes
- la capture (101) d'au moins une image (8) d'une combinaison d'un objet de référence (5) présentant au moins une dimension prédéterminée (d1) et d'au moins une partie de la première électrode (2) et de la deuxième électrode (3),
- la détection (102) d'une première représentation de pixels (10) et d'une deuxième représentation de pixels (11) dans l'au moins une image capturée (8), la première représentation de pixels (10) étant associée à la dimension prédéterminée (d1) de l'objet de référence (5) et la deuxième représentation de pixels (11) étant associée à l'écartement (w1) entre la première électrode (2) et la deuxième électrode (3),
- la détermination (103) d'une dimension de pixel d'un élément pixel dans l'au moins une image (8) sur la base de la première représentation de pixels (10) et de l'au moins une dimension prédéterminée (d1),
- la détermination (104) de l'écartement (w1) sur la base de la deuxième représentation de pixels (11) et de la dimension de pixel, et
- la détection d'un état d'usure de la bougie d'allumage (4) sur la base de l'écartement (w1) déterminé.

13. Procédé (100) selon la revendication 12, l'étape de détection (102) comprenant
- la détermination (102a) de valeurs d'intensité de pixel pour chaque élément pixel au sein de l'au moins une image capturée (8) ;
- la classification (102b) des valeurs d'intensité de pixel sur la base d'un seuil d'intensité de pixel servant à déterminer si les valeurs d'intensité de pixel sont classifiées comme arrière-plan ou comme avant-plan ; et
- la sommation (102c) des valeurs d'intensité de pixel classifiées de chaque élément pixel selon une première direction (X) et/ou une deuxième direction (Y) au sein de chaque image capturée (8) afin de former respectivement une première représentation graphique de sommation d'intensités (21) et une deuxième représentation graphique de sommation d'intensités (22) de manière à identifier la première représentation de pixels (10) et la deuxième représentation de pixels (11).

14. Procédé selon la revendication 12 ou 13, l'étape de détection (102) comprenant en outre l'identification (102d) de zones dans la première représentation graphique de sommation d'intensités (21) et la deuxième représentation graphique de sommation d'intensités (22), chaque zone étant représentative de la première représentation de pixels (10) et de la deuxième représentation de pixels (11).

15. Support de stockage d'ordinateur stockant un programme d'ordinateur exécutable qui, lorsqu'il est exécuté, amène soit un ordinateur, soit une circuiterie de commande (9) à réaliser le procédé selon l'une quelconque des revendications 12 à 14.
